# EUROPEAN PATENT SPECIFICATION

(11) **EP 2 263 774 B1**
(45) Date of publication and mention of the grant of the patent: **20.06.2012**
(21) Application number: 09161235.8
(22) Date of filing: 27.05.2009
(51) Int. Cl.: F01N 3/032, B01D 46/00, F01N 3/027

(54) **Method for regenerating a filter unit and a filter unit**
Verfahren und Vorrichtung zur Regeneration von Partikelfiltern
Procédé pour la régénération d'un filtre

(43) Date of publication of application: 22.12.2010
(73) Proprietor: Proventia Emission Control Oy, 90460 Oulunsalo (FI)
(72) Inventor: Lotvonen, Jari, FI-90450, Kempele (FI); Amberla, Arno, FI-37500, Lempäälä (FI); Vakkilainen, Aulis, FI-90230 Oulu (FI); Hakkarainen, Markku, FI-90440, Kempele (FI); Karhu, Juha, FI-90540, Oulu (FI); Sipilä, Pertti, FI-90650, Oulu (FI); Tikkinen, Toni, FI-90460, Oulunsalo (FI); Kurikka, Jaakko, FI-90120, Oulu (FI); Sipilä, Markku, FI-91410, Jokirinne (FI); Kuusiniva, Ilkka, FI-90450, Kempele (FI)
(74) Representative: Vanhala, Jorma Kalevi

(56) References cited:
- EP-A1- 0 953 737
- WO-A2-02/063148
- BE-A- 515 985
- US-A1- 2005 139 074
- US-B1- 6 233 926

## Description

The object of the invention is a method for electric regeneration of a filter unit comprising at least two filter elements, in which method the flow of the gas to be cleaned through a filter element to be regenerated is cut off substantially completely for the duration of the regeneration. A further object of the invention is a filter unit for cleaning gas containing particles, which filter unit has a housing, at least two electrically regenerable filter elements placed inside the housing through which the gas to be cleaned is arranged to flow, an inlet leading into the housing for the inflow of the gas to be cleaned and an outlet exiting the housing for the outflow of the cleaned gas.

The vehicle engine exhausts contain harmful compounds and particles. Especially fine particles generated by diesel engines are very hazardous to health. For reducing particulate emission of vehicles, various kinds of filters have been developed with which particles are removed from the exhaust flow. In order to maintain the filtering capacity of the filter it has to be regenerated, in other words cleaned of the particles trapped in it, from time to time. The particle-holding capacity of the filter can be improved by forming filter units consisting of several individual filter elements. At the same time regeneration of an individual filter element during the use of a filter unit is made possible.

From publication US 7267703 is known an electrically regenerable filter element. From publication US 6572682 is known a filter unit which consists of several electrically regenerable cylindrical filter elements, which have been arranged around a perforated inner tube as filter stacks. The filter stacks have been placed within a common sleeve. There is an input port in the first end of the filter unit for the inflow of the exhaust gas, and in the second end of the filter unit there is a support plate in which there are several apertures for the outflow of the cleaned exhaust gas. An inner tube of one filter stack has been connected to each aperture of the support plate. The exhaust gas to be cleaned flows inside the sleeve of the filter unit from the first end of the filter unit and exits the sleeve through the apertures. Inside the filter unit the exhaust gas flows through the filter surface of individual filter elements into the inner tube of the filter stack and along the inner tube to the exit port. Flow-through of the exhaust gas through the filter stacks is controlled by a valve gear located in connection with the apertures with which the ends of the filter stack's inner tubes can be closed.

In the filter unit according to publication US 6572682 the flow-through of the exhaust gas has to be cut off from the entire filter stack for the duration of the regeneration of an individual filter element, whereby the entire filtering surface area of the filter stack is out of use. Accordingly, there has to be at least two filter stacks in a filter unit for the exhaust filtering to be possible also during regeneration of an individual filter element. This increases the size of the filter unit and raises manufacturing costs. All filter stacks have been placed within the same chamber-like space inside a common sleeve. For the duration of the regeneration the exhaust flow through the filter stack is cut off by means of a valve in the exit end of the filter stack. The exhaust gas is, however, able to flow freely inside the sleeve along the outer surfaces of the filter stack, which cools down the filter elements to be regenerated and can lead to incomplete regeneration.

Document US2005/0139074 discloses a particulate trap having a plurality of filters and an air distributor for blocking exhaust flow to at least one of the plurality of filters at a given time.

An object of the invention is to introduce a new method for regenerating a filter unit and a filter unit, with which the disadvantages and defects associated with the prior art can be significantly reduced.

The objects according to the invention are achieved with a method and a filter unit, which are characterised by what is set forth in the independent claims. Some preferred embodiments of the invention are presented in the dependent claims.

In the method according to the invention a filter unit with at least two electrically regenerable filter elements is regenerated. The filter unit is aimed for cleaning particle-containing gas, such as exhaust gas generated by diesel engines. In electric regeneration, electric current is led to the filter element, whereby the filter element's filter fleece made of electroconductive material heats up strongly and the particles trapped in it burn off. For the duration of the regeneration the flow of the gas to be cleaned through the filter element's filter fleece is cut off substantially completely so that the flow-through of the gas will not cool down the filter. In the invention the flow of the gas to be cleaned is cut off by blocking the entrance of the gas to be cleaned into the filter element. That is to say, the flow of the gas to be cleaned is cut off in the direction of the flow from the front of the filter element. In addition, the flow-through of the gas is cut off only in the filter element to be regenerated at the time, whereby all the other filter elements of the filter unit continue filtering.

In a preferred embodiment of the method according to the invention the filter elements are placed in separate chambers, which chambers have an inlet channel for the inflow of the particle-containing gas to be cleaned. The entrance of the gas into the filter element is blocked by closing the inlet channel substantially completely for the duration of the regeneration.

In the filter unit according to the invention there is a housing inside of which at least two electrically regenerable filter elements have been placed through which the gas to be cleaned has been arranged to flow. The filter unit is aimed for cleaning particle-containing gas, such as exhaust generated by diesel engines. In the filter unit there is an inlet leading into the housing for the inflow of the gas to be cleaned and an outlet exiting the housing for the outflow of the cleaned gas. In the invention there are at least two separate chambers inside the housing into which the filter elements have been placed. There is an inlet channel in the chambers for the inflow of the gas to be cleaned. The inlet channel is closable substantially completely for the duration of the regeneration, whereby the flow into the chamber of the gas to be cleaned is blocked.

In the filter unit according to the invention there is a distributing chamber on the surface of the housing into which the inlet channels of the chambers open. In the wall of the distributing chamber there is a flow pipe leading into the distributing chamber for the inflow of the gas to be cleaned. There is a valve which can be opened or closed in connection with the inlet channel. During normal use of the filter unit all valves are in opened position, but for the duration of the regeneration the valve of the chamber in question is closed substantially completely.

In the filter unit according to the invention the outlet exiting the housing is an inner tube, the first end of which extends outside the housing and the second end extends inside the housing. The filter elements are parts that are cylindrically shaped and that have been fitted around the second end of the inner tube extending inside the housing, and there are through holes in the part of the inner tube's wall which extends inside the housing for the flow-through of gas.

In a preferred embodiment of the filter unit according to the invention there are three chambers, and at least one filter element has been placed into each chamber.

An advantage of the method according to the invention is that by means of it, stable circumstances independent of ambient conditions and exhaust volume flow can be created for the duration of the regeneration, under which circumstances the exhaust flow does not cool down the filter element to be regenerated. Thanks to this, less electric current is needed for regeneration, which improves the energy efficiency of the filter unit.

A further advantage of the invention is that the filtered exhaust flow is led to go inside the filter unit in regeneration phase at each time. The exhaust gas flowing along the inner tube of the filter unit does not cool down the regenerable filter unit harmfully but ensures that enough oxygen is available in regeneration for the burning of particles trapped in the filter. By means of the invention the regeneration efficiency and control of the combustion temperature of the particles are thus improved. Better control of the combustion temperature decreases the risk of destruction of the filter element due to overheating.

A still further advantage of the invention is that in it, the flow-through of the exhaust gas is cut off for the duration of the regeneration only in the filter element to be regenerated. During regeneration only the filter surface area of the filter element in regeneration at the time is out of filtering use. Thus the invention enables achievement of the same filtering capacity with less filter elements, which down-sizes the filter unit and lowers manufacturing costs.

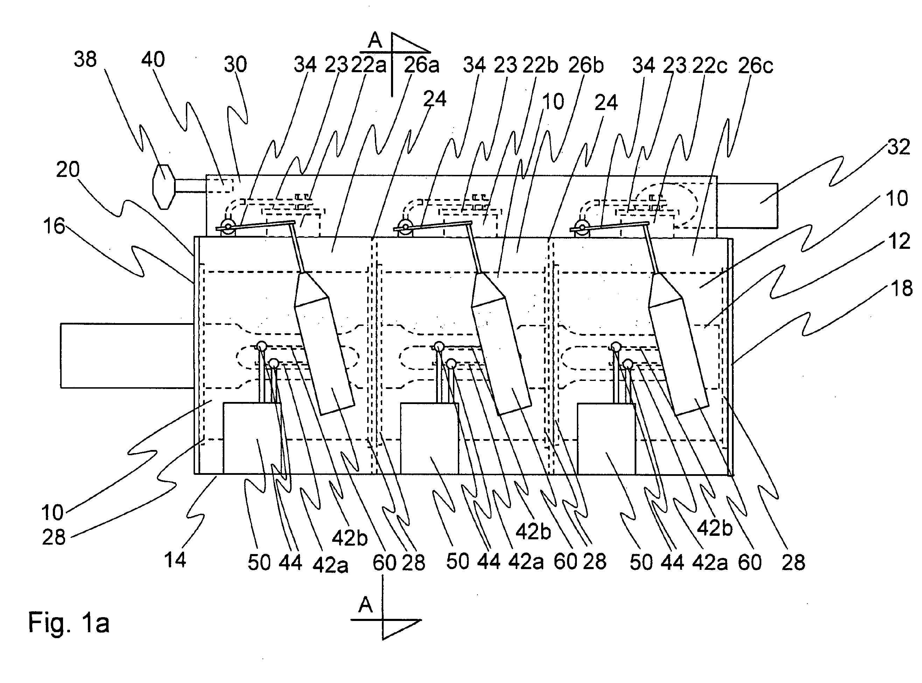

Next the invention will be described in detail. In the description reference is made to the accompanying drawings, in which
Figure 1a shows an exemplary filter unit according to the invention seen from the side;

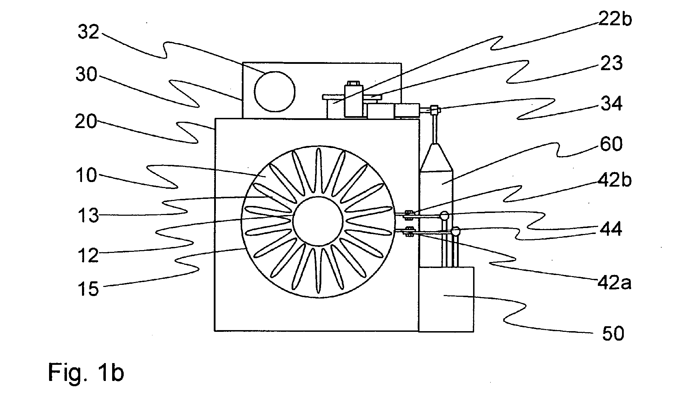

Figure 1b shows a cross section view of the filter unit of Figure 1 a; and

In Fig. 1 a is shown an exemplary filter unit according to the invention seen from the side and in Fig. 1b the same filter unit as a cross section view cut in sectional plane A-A. In order to better display the structure of the filter unit the outer casing of the filter unit is not shown in the figure. There are three electrically regenerable filter units 10 in the filter unit, which comprise a filter fleece 13 made out of electroconductive material through which particle-containing gas is led to flow. The filter fleece is surrounded by a metallic protective casing 15, which is perforated for the flow-through of the gas to be cleaned (Fig. 1 b). The filter fleece of the filter element is in pleated form so that a filtering surface area as large as possible is acquired for the filter element. The particles of the gas to be filtered become trapped in the filter, whereby the filter gradually clogs. The filter is regenerated, in other words cleaned of the particles trapped in it, by supplying the filter fleece with an electric current, whereby the filter fleece heats up strongly and the particles trapped in it burn into gaseous bodies. After regeneration the filter's filtering capacity has recovered the original level. The operating principle of the electrically regenerable filters is known as such, so it will not be described here in detail.

In the filter unit there is a housing 20, which comprises an outer casing 14, a first end plate 16 and a second end plate 18. Cylindrical filter elements 10 have been placed adjacently inside the housing around an inner tube 12. Between each filter element 10 there is a spacer plate 24, which extends from its edges onto the inner surface of the outer casing. The spacer plates thus bound three separate chambers 26a, 26b, 26c within the housing, in each of which chambers there is one filter element 10. On the outer surface of each filter element there are side by side at a distance from each other two planar contact members, the first contact member 42a of which is connected to the first end of the filter fleece and the second contact member 42b to the second end of the filter fleece. A coupling unit 44 has been coupled with each of both contact members, the second end of which unit extends through the outer casing 14 to the outside of the housing. The contact members have been joined with the control relays 50 outside the housing, which relays have been connected to a power source, such as a vehicle's battery, by conductors (the power source is not shown in the figure). The electric current needed for regeneration can be led via the control relays from the power source to the filter element.

The first end of the inner tube 12 extends through a hole in the first end plate 16 to the outside of the housing 20 and its second end bounds to the end plate 18 inside the housing 20. The filter elements have been placed around the inner tube into chambers 26a, 26b, 26c in such a way that the end surfaces of the filter elements settle against the surfaces of the end plates and/or spacer plates bounding the chambers. Between each end of a filter element and surface of an end plate or a spacer plate settling against it there is a gasket 28. With the gasket the sealing of the joint is secured and the flow of the particles in the gas to be filtered pass the filter element into the inner tube is prevented. The gaskets also function as insulants between the filter element and the spacer plate and end plate. In the inner tube, by the filter elements, there are longitudinal holes which enable the gas flow through the filter element into the inner tube.

On the first surface of the outer casing 14 of the housing 20 facing upwards in Fig. 1 a there is a closed distributing chamber 30 in the end wall of which there is a flow pipe 32 leading inside the distributing chamber. The first side of the outer casing 14 forms a wall of the distributing chamber. On this distributing chamber wall there are three inlet channels 22a, 22b, 22c which lead into chambers 26a, 26b, 26c. Thus, a connection opens from the distributing chamber to each chamber via an inlet channel of its own. In connection with the inlet channel there is a discoid valve 23 with which the inlet channel can be closed for the duration of the regeneration of the filter element. Particles may accumulate to the mouth of the inlet channel which prevent a complete closure of the inlet channel, or the closure of the valve may be slightly incomplete for some other reason. Therefore, a small amount of gas to be cleaned may flow via the inlet channel into the chamber although the inlet channel is closed with a valve. Gas flow of this sort is typically so minor, approximately 1 to 2 per cent of the normal volume flow of the gas to be cleaned, that it does not interfere with the regeneration process. It is sufficient from the point of view of the operation of the filter unit that the inlet channel is substantially completely closed during regeneration.

The valve is opened and closed by means of a swinging arm 34 extending through the distributing chamber wall outside the distributing chamber. To the end of the swinging arm has been connected an actuator 60 located outside the housing 20, by using of which the swinging arm and a valve connected to it can be turned to desired position. Preferably the actuator is an electric-, hydraulic- or air-driven piston-cylinder actuator with a protruding shaft to be connected to the swinging arm 34. The actuator is controlled by a control unit (not shown in the figure) which belongs to the filter unit.

In the second end of the distributing chamber there is a tube 40 leading inside the distributing chamber, in the end of which there is a pressure sensor 38. With the pressure sensor is measured the gas pressure prevailing inside the distributing chamber. The pressure sensor is connected to the control unit with conductors (not shown in the figure). The pressure sensor can be outside the distributing chamber like in Fig. 1a, or it can be at the end of the tube 40 inside the distributing chamber.

The filter unit according to the invention works as follows: Particle-containing gas, such as diesel engine exhaust, is led along the flow pipe 32 into the distributing chamber 30, from where the gas flows via the inlet channels 22a, 22b, 22c into the chambers 26a, 26b, 26c. The overpressure generated into the chambers forces the gas to flow through the filter elements 10 into the inner tube 12. The particles in the gas going through the filter element become trapped in the filter element, so the gas passing into the inner tube has cleaned of the particles. The cleaned gas flows via the first end of the inner tube out of the housing.

The particles trapped in the filter element gradually clog the tiny flow-through holes of the filter element's filter fleece, whereby the flow resistance of the gas increases. At the same time the cleaning ability, or the ability to remove particles from the through-flowing gas improves. However, the clogging of the filter element leads also to a rise in so-called back pressure of the gas pressure in the chambers 26a, 26b, 26c and the distributing chamber 30. The volume of the back pressure is measured with a pressure sensor 38 located in the end of the tube 40 leading out of the distributing chamber. When the back pressure grows up to the predetermined threshold value, the regeneration of the filter unit is started.

In the method according to the invention the regeneration of the filter unit takes place as follows: The inlet channel 22a leading into the first channel 26a is closed by a valve 23, whereby the flow of the gas to be cleaned into this chamber is blocked substantially completely. At the same time electric current is conducted from a power source via the control relay 50 to the filter element 10 in the chamber, whereby the filter element's filter fleece heats up strongly and the particles trapped in the filter fleece burn into gaseous bodies. During the regeneration of the first chamber's filter element the inlet channels of the second and third chamber 26b, 26c are open, that is, the filter elements in these chambers are working all the while. Gas flows via the second and third chamber into the inner tube. The gas cleaned during the regeneration of the first chamber's filter element flows through the central hole of the filter element to be regenerated. Oxygen flows inside the filter element with the cleaned gas, which makes possible complete burning of soot and particles. The filter unit's regeneration is continued for a predetermined period of time. When the regeneration is finished, the original filtering capacity of the filter element has recovered. After regeneration the valve 23 is opened and gas to be cleaned is allowed to flow into the chamber 26a again. The valves 23 are thus for the most part in opened position and closed only for the duration of the regeneration.

The filter's regeneration moment in determined by the measured back pressure. A threshold value is predetermined for the back pressure, exceeding of which is a sign of that the filter unit needs regeneration. Back pressure is measured with the pressure sensor 38 and the measurement results are forwarded to the filter unit's control unit. There is a computer program in the control unit, which gives control commands to the actuators 60 controlling the position of the valves 23, whereby the valves close for the duration of the regeneration. The control unit also controls the supply of electric current from the power source via the control relay 50 to the filter element.

After the regeneration of the filter element of the first chamber 26a the filtering capacity of the regenerated filter element has recovered the original level as a result of which the back pressure measured for the entire filter unit drops to a lower level that is smaller than the threshold value of the regeneration. After this, all filter elements of the filter unit are in filtering use again and the back pressure to be measured with the pressure sensor begins to rise gradually. When the back pressure reaches the threshold value of regeneration again, next is regenerated the filter element in the second chamber, and after regeneration it is returned back to filtering use. When the back pressure exceeds the threshold value of regeneration the next time, the filter element in the third chamber is regenerated in the way described above. After this the regeneration cycle of the filter elements starts over from the first chamber. The filter elements' regeneration order is insignificant, so it can also be some other than presented above. The central feature of the method is that during regeneration, only the filter element under regeneration is out of filtering use and the other filter elements work as normal.

The regeneration moment of the filter element can be determined also by pretimed control instead of measuring the back pressure. In this case, regeneration takes place after a certain predetermined operating time that has been inputted into the control unit. Pretimed control can be used for example when the particle content and volume flow of the gas to be cleaned per time unit is known accurately enough, whereby the time it takes for the filter to clog can be estimated reliably in advance.

The regeneration moment of the filter element can be determined computationally according to the accumulated particle mass. The regeneration event itself can be determined to take place at a moment preferable from the point of view of the device producing gas to be cleaned. The regeneration can then take place for example when enough electricity is at hand for regeneration.

In the filter unit according to the invention shown in Fig. 1a there are three filter elements, each of which has been placed in a chamber of its own. It is evident that there may also be some other number of filter elements such as two, four, five, six, seven, eight, or more than eight of them. There can also be more than one filter element in one chamber, for example two separate filter elements. In the method according to the invention all filter elements in a chamber are regenerated simultaneously or in sequence, whereby the flow of the gas to be cleaned into the chamber is question is blocked during the regeneration. The filter element shown in Figs. 1 a and 1 b is regenerable in one part, that is, it has one filter fleece to the ends of which the contact members have been connected. It is evident that in the filter unit according to the invention also such filter elements in which the filter fleece is comprised of two or more separately regenerable parts may be used. The filter element's filter fleece may be catalytically coated, whereby the temperature required for the regeneration of the filter element is lower than in an uncoated filter element. Less electric current is thus needed for the regeneration of a coated filter element than for the regeneration of an uncoated filter element.

Some preferred embodiments of the method and filter unit according to the invention have been described above. The filter unit according to the invention is especially suitable for cleaning diesel engine exhausts, but it can also be used for cleaning of other particle-containing gases. The invention is not limited to the solutions just described, but the inventive idea can be applied in numerous ways within the limits set by the claims.

## Claims

1. A filter unit for cleaning particle-containing gas comprising a housing (20), at least two electrically regenerable filter elements (10) placed within the housing, through which the gas to be cleaned has been arranged to flow, an inlet leading inside the housing for the inflow of the gas to be cleaned, an outlet exiting the housing for the outflow of the cleaned gas and inside said housing, each chamber including at least two separate chambers (26a, 26b, 26c) at least one filter element (10) and an inlet channel (22a, 22b, 22c) which is substantially completely closable for the inflow of the gas to be cleaned, **characterised in that** said outlet exiting the housing (20) is an inner tube (12) the first end of which extends outside the housing (20) and the second end extends inside the housing and the filter elements (10) are cylindrically-shaped parts, which have been fitted around the second end of the inner tube and there are through-holes in the part of the inner tube's wall which extends inside the housing for the flow-through of gas, and on the surface of the housing (20) there is a distributing chamber (30) into which the inlet channels (22a, 22b, 22c) of the chambers (26a, 26b, 26c) open, and in the distributing chamber's wall there is a flow pipe (32) leading inside the distributing chamber and in connection with each inlet channel (22a, 22b, 22c) there is a valve (23) which can be opened and closed.

2. The filter unit according to claim 1, **characterised in that** in the housing (20) there is an outer casing (14), a first end plate (16) and a second end plate (18), which form the outer surface of the housing, and spacer plates (24) placed inside the housing, which divide the inner space of the housing into chambers (26a, 26b, 26c).

3. The filter unit according to claim 1 or 2, **characterised in that** it comprises three chambers (26a, 26b, 26c) and at least one filter element (10) has been placed in each chamber.

4. The filter unit according to claim 1 to 2, **characterised in that** it comprises two, four, five, six, seven, or eight chambers (26a, 26b, 26c) and at least one filter element (10) has been placed in each chamber.

5. The filter unit according to any of the claims 1 to 4, **characterised in that** it is a filter unit used for cleaning diesel engines exhausts.

6. A method for electric regeneration of a filter unit as defined in claim 1, in which method the flow of the gas to be cleaned through the regenerable filter element is cut off for the duration of the regeneration substantially completely by blocking the entrance of the gas to be cleaned into the filter element, and the flow-through of the gas to be cleaned is cut off only in the filter element to be regenerated at the time.

7. The method according to claim 6, **characterised in that** the filter elements (10) are placed in separate chambers (26a, 26b, 26c), in which chambers there is an inlet channel (22a, 22b, 22c) and the entrance of gas into the filter element is blocked by closing the inlet channel substantially completely.

8. The method according to claims 6 or 7, **characterised in that** all filter elements (10) of the filter unit are regenerated by turns and during the regeneration of one filter element (10) the gas to be cleaned is allowed to flow through the other filter elements of the filter unit.

9. The method according to any of the claims 6 to 8, **characterised in that** by means of it is regenerated a filter unit used in filtering diesel engine exhausts.

## Patentansprüche

1. Filtereinheit zum Reinigen von Partikel aufweisendem Gas, umfassend ein Gehäuse (20), zumindest zwei elektrisch regenerierbare Filterelemente (10), die innerhalb des Gehäuses angeordnet sind, durch welches das zu reinigende Gas angeordnet wurde, um zu fließen, einen Einlass, der in das Gehäuse für den Zufluss des zu reinigenden Gases führt, einen Auslass, der das Gehäuse verlässt für den Abfluss des gereinigten Gases und zumindest zwei getrennte Kammern (26a, 26b, 26c) in dem Gehäuse, wobei jede Kammer zumindest ein Filterelement (10) und einen Einlasskanal (22a, 22b, 22c), der im Wesentlichen vollständig verschließbar ist, für den Zufluss des zu reinigenden Gases, umfasst,
**dadurch gekennzeichnet, dass** der Auslass, der das Gehäuse (20) verlässt, ein Innenrohr (12) ist, dessen erstes Ende sich außerhalb des Gehäuses (20) erstreckt und dessen zweites Ende sich in dem Gehäuse erstreckt und wobei die Filterelemente (10) zylindrische geformte Teile sind, die um das zweite Ende des Innenrohrs gepasst wurden, und es Durchgangslöcher in dem Abschnitt der Wand des Innenrohrs gibt, der sich in dem Gehäuse für den Durchfluss von Gas erstreckt, und wobei an der Oberfläche des Gehäuses (20) eine Verteilkammer (20) ist, in welche sich die Einlasskanäle (22a, 22b, 22c) der Kammern (26a, 26b, 26c) öffnen und in der Wand der Verteilkammer eine Flussleitung (32) ausgebildet ist, die in die Verteilkammer führt, und wobei in Verbindung mit dem Einlasskanal (22a, 22b, 22c) ein Ventil (23) vorgesehen ist, welches geöffnet und geschlossen werden kann.

2. Filtereinheit nach Anspruch 1, **dadurch gekennzeichnet, dass** in dem Gehäuse (20) ein äußeres Gehäuse (14), eine erste Endplatte (16) und eine zweite Endplatte (18), die die äußere Oberfläche des Gehäuses bilden, und Abstandsplatten (24), die in dem Gehäuse angeordnet sind, welche den inneren Raum des Gehäuses in Kammern (26a, 26b, 26c) unterteilen, vorgesehen sind.

3. Filtereinheit nach Anspruch 1 oder 2, **dadurch gekennzeichnet, dass** sie drei Kammern (26a, 26b, 26c) umfasst und dass zumindest ein Filterelement (10) in jeder Kammer angeordnet wurde.

4. Filtereinheit nach Anspruch 1 bis 2, **dadurch gekennzeichnet, dass** sie zwei, vier, fünf, sechs, sieben oder acht Kammern (26a, 26b, 26c) umfasst und zumindest ein Filterelement (10) in jeder Kammer angeordnet wurde.

5. Filtereinheit nach einem der Ansprüche 1 bis 4, **dadurch gekennzeichnet, dass** sie eine Filtereinheit ist, die zum Reinigen von Dieselmotorabgasen verwendet wird.

6. Verfahren zur elektrischen Regeneration einer Filtereinheit nach Anspruch 1, bei welchem Verfahren der Fluss des zur reinigenden Gases durch das regenerierbare Filterelement für die Dauer der Regeneration im Wesentlichen vollständig durch Blockieren des Eingangs des zu reinigenden Gases in das Filterelement abgeschnitten wird und der Durchfluss des zu reinigenden Gases nur in dem zu regenerierenden Filterelement zu dem Zeitpunkt abgeschnitten wird.

7. Verfahren nach Anspruch 6, **dadurch gekennzeichnet, dass** die Filterelemente (10) in getrennten Kammern (26a, 26b, 26c) angeordnet werden, in welchen Kammern ein Einlasskanal (22a, 22b, 22c) vorgesehen ist und der Eingang des Gases in das Filterelement durch Verschließen des Einlasskanals im Wesentlichen vollständig blockiert wird.

8. Verfahren nach Anspruch 6 oder 7, **dadurch gekennzeichnet, dass** alle Filterelemente (10) der Filtereinheit abwechselnd regeneriert werden und während der Regeneration von einem Filterelement (10) es dem zu reinigenden Gas gestattet wird durch die anderen Filterelemente der Filtereinheit zu fließen.

9. Verfahren nach einem der Ansprüche 6 bis 8, **dadurch gekennzeichnet, dass** mittels dieses Verfahrens eine Filtereinheit regeneriert wird, die zum Filtern von Dieselmotorabgasen verwendet wird.

## Revendications

1. Unité de filtre pour nettoyer un gaz contenant des particules, comprenant un logement (20), au moins deux éléments de filtre (10) pouvant être régénérés électriquement placés dans le logement, à travers lequel le gaz à nettoyer a été agencé pour circuler, une entrée conduisant à l'intérieur du logement pour l'entrée du gaz à nettoyer, une sortie sortant du logement pour la sortie du gaz nettoyé et au moins deux chambres (26a, 26b, 26c) séparées à l'intérieur dudit logement, chaque chambre comprenant au moins un élément de filtre (10) et un canal d'entrée (22a, 22b, 22c) qui peut être sensiblement complètement fermé pour l'entrée du gaz à nettoyer, **caractérisée en ce que** ladite sortie sortant du logement (20) est un tube interne (12) dont la première extrémité s'étend à l'extérieur du logement (20) et la deuxième extrémité s'étend à l'intérieur du logement et les éléments de filtre (10) sont des parties formées de manière cylindrique, qui ont été montées autour de la deuxième extrémité du tube interne, et **en ce qu'**il y a des trous traversants dans la partie de la paroi du tube interne qui s'étend à l'intérieur du logement pour l'écoulement de gaz, et **en ce que**, sur la surface du logement (20), il y a une chambre de distribution (30) dans laquelle les canaux d'entrée (22a, 22b, 22c) des chambres (26a, 26b, 26c) s'ouvrent, et **en ce que**, dans la paroi de la chambre de distribution, il y a un tuyau d'écoulement (32) conduisant à l'intérieur de la chambre de distribution et, en relation avec chaque canal d'entrée (22a, 22b, 22c), il y a une vanne (23) qui peut être ouverte et fermée.

2. Unité de filtre selon la revendication 1, **caractérisée en ce que**, dans le logement (20), il y a un carter extérieur (14), une première plaque d'extrémité (16) et une deuxième plaque d'extrémité (18), qui forment la surface extérieure du logement, et des plaques d'espacement (24) placées à l'intérieur du logement, qui divisent l'espace intérieur du logement en des chambres (26a, 26b, 26c).

3. Unité de filtre selon la revendication 1 ou 2, **caractérisée en ce qu'**elle comprend trois chambres (26a, 26b, 26c) et **en ce qu'**au moins un élément de filtre (10) a été placé dans chaque chambre.

4. Unité de filtre selon la revendication 1 ou 2, **caractérisée en ce qu'**elle comprend deux, quatre, cinq, six, sept ou huit chambres (26a, 26b, 26c) et au moins un élément de filtre (10) a été placé dans chaque chambre.

5. Unité de filtre selon l'une quelconque des revendications 1 à 4, **caractérisée en ce qu'**il s'agit d'une unité de filtre utilisée pour nettoyer les gaz d'échappement de moteurs diesel.

6. Procédé de régénération électrique d'une unité de filtre selon la revendication 1, dans lequel procédé, l'écoulement du gaz à nettoyer à travers l'élément de filtre pouvant être régénéré est arrêté pendant la durée de la régénération sensiblement complètement en bloquant l'entrée du gaz à nettoyer dans l'élément de filtre, et l'écoulement du gaz à nettoyer n'est arrêté que dans l'élément de filtre à régénérer à cet instant.

7. Procédé selon la revendication 6, **caractérisé en ce que** les éléments de filtre (10) sont placés dans des chambres (26a, 26b, 26c) séparées, dans lesquelles chambres, il y a un canal d'entrée (22a, 22b, 22c) et l'entrée de gaz dans l'élément de filtre est bloquée en fermant le canal d'entrée sensiblement complètement.

8. Procédé selon la revendication 6 ou 7, **caractérisé en ce que** tous les éléments de filtre (10) de l'unité de filtre sont régénérés tour à tour et, pendant la régénération d'un élément de filtre (10), le gaz à nettoyer est autorisé à s'écouler à travers les autres éléments de filtre de l'unité de filtre.

9. Procédé selon l'une quelconque des revendications 6 à 8, **caractérisé en ce que**, au moyen de celui-ci, une unité de filtre utilisée pour filtrer les gaz d'échappement de moteurs diesel est régénérée.
